(19)

Europäisches
Patentamt
European
Patent Office
Office européen
des brevets

(11) **EP 3 636 605 A1**

(12) **EUROPEAN PATENT APPLICATION**
published in accordance with Art. 153(4) EPC

(43) Date of publication:
**15.04.2020 Bulletin 2020/16**

(21) Application number: **18813784.8**

(22) Date of filing: **31.05.2018**

(51) Int Cl.:
**C03B 27/012** (2006.01)     **C03C 3/089** (2006.01)
**F24C 15/10** (2006.01)     **H05B 6/12** (2006.01)

(86) International application number:
**PCT/JP2018/021069**

(87) International publication number:
**WO 2018/225627 (13.12.2018 Gazette 2018/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.06.2017 JP 2017111183
28.03.2018 JP 2018062142**

(71) Applicant: **AGC Inc.
Chiyoda-ku
Tokyo 100-8405 (JP)**

(72) Inventors:
• **MIYASAKA Junko
Tokyo 100-8405 (JP)**
• **KOIKE Akio
Tokyo 100-8405 (JP)**
• **YAMAMOTO Hiroyuki
Tokyo 100-8405 (JP)**

(74) Representative: **Müller-Boré & Partner
Patentanwälte PartG mbB
Friedenheimer Brücke 21
80639 München (DE)**

(54) **TEMPERED GLASS**

(57)     The present invention pertains to: a tempered glass which is obtained by physically strengthening a glass having an average coefficient of thermal expansion at 50-350°C of $(20 \times 10^{-7})$-$(50 \times 10^{-7})/)$°C and a glass transition temperature of 560°C or higher; and a tempered glass obtained by physically strengthening a glass containing, in mole percent on an oxide basis, 0-4% of $R_2O$ ($R_2O$ is defined in the specification) and 5-25% of $B_2O_3$.

EP 3 636 605 A1

**Description**

TECHNICAL FIELD

The present invention relates to a strengthened glass having excellent heat resistance and additionally having surface compressive stress being difficult to be decreased even though exposed to high temperature for a long period of time.

BACKGROUND ART

Conventionally, a heat-resistant glass is used in various uses such as a top plate of a heater such as a heating cooker, a window material of a high temperature furnace or a building material requiring fireproof property. For example, a low expansion lithium aluminosilicate glass ceramics is conventionally used as a top plate of a heater such as a heating cooker. However, the low expansion lithium aluminosilicate glass ceramics has reddish brown color tone, and had a problem that the glass ceramics is difficult to harmonize with ambient color tone and design.

Furthermore, to increase heat resistance, physical strengthening such as strengthening by air cooling is sometimes applied to a heat-resistant glass (see Patent Literature 1). For example, a heat-resistant glass such as the low expansion strengthened glass "PYRAN" (registered trademark of Schott) which is obtained by applying a physical strengthening treatment to a borosilicate glass such as PYREX (registered trademark of Coming) or TEMPAX (registered trademark of Schott), that is general-purpose low expandable glass, is used.

CITATION LIST

PATENT LITERATURE

Patent Literature 1: JP-T-2016-500642 (the term "JP-T" as used herein means a published Japanese translation of a PCT patent application)

SUMMARY OF INVENTION

TECHNICAL PROBLEM

However, the conventional physically strengthened heat-resistant glass had a problem that surface compressive stress is relaxed when the glass was used at high temperature for a long period of time and the surface compressive stress is decreased.

In view of the above, the present invention has an object to provide a strengthened glass having excellent heat resistance and additionally having surface compressive stress being difficult to be decreased even though exposed to high temperature for a long period of time.

SOLUTION TO PROBLEM

As a result of intensive investigations, the present inventors have found that the problem can be solved by a strengthened glass described below and have completed the present invention.

Specifically, a strengthened glass according to one embodiment of the present invention is a strengthened glass obtained by physically strengthening a glass having an average coefficient of thermal expansion of from $20 \times 10^{-7}$ to $50 \times 10^{-7}/°C$ at 50 to 350°C and a glass transition temperature of 560°C or higher.

The glass contains, as represented by mole percentage based on oxides,

$R_2O$: from 0 to 5% (provided that $R_2O$ is at least one of $Li_2O$, $Na_2O$ and $K_2O$),

RO: from 5 to 15% (provided that RO is at least one of MgO, CaO, SrO and BaO),

$SiO_2$: from 55 to 80%, and

$B_2O_3$: from 0 to 25%.

A strengthened glass according to another embodiment of the present invention is a glass obtained by physically strengthening a glass containing, as represented by mole percentage based on oxides,

$R_2O$: from 0 to 4% (provided that $R_2O$ is at least one of $Li_2O$, $Na_2O$ and $K_2O$), and

$B_2O_3$: from 5 to 25%.

In the strengthened glass, the glass further contains, as represented by mole percentage based on oxides,

$SiO_2$: from 55 to 80%, and

RO: from 5 to 15% (provided that RO is at least one of MgO, CaO, SrO and BaO).

The glass has an average coefficient of thermal expansion of from $20\times10^{-7}$ to $50\times10^{-7}$/°C at 50 to 350°C.

The glass has a glass transition temperature of 560°C or higher.

The glass contains, as represented by weight percentage based on oxides, from 0.0001 to 0.2% of $Fe_2O_3$.

The glass contains, as represented by weight percentage based on oxides, from 0.0001 to 2.0% of at least one selected from the group consisting of a chloride, $SnO_2$ and $SO_3$.

The glass preferably has a devitrification temperature lower than a temperature at which a viscosity of the glass is $10^3$ dPa·s.

The glass preferably has an electrical conductivity $\sigma$ at a temperature at which a viscosity of the glass is $10^3$ dPa·s of 2.5 ms/m or more as a value of log $\sigma$.

When a glass having a mirror finished surface and a having a thickness of 1 mm is used as the glass and an indentation is formed on the strengthened glass using Vickers indenter, a load of the Vickers indenter at which an incidence of cracking is 50% is preferably 100 gf or more.

The strengthened glass preferably has surface compressive stress of from 5 to 200 MPa.

The strengthened glass preferably has a thickness of 2 mm or more.

The strengthened glass preferably has a stress residual ratio of 75% or more after treated at 400°C for 12 hours.

Furthermore, the strengthened glass preferably has a stress residual ratio of 60% or more after treated at 400°C for 21 hours.

The strengthened glass further has an organic printed layer on one main surface of the strengthened glass.

In the above case, color tone difference $\Delta E$ in a comparison between the strengthened glass further having the organic printed layer and only the organic printed layer is preferably 10 or less.

The strengthened glass further has a ceramic printed layer on at least a part of one main surface of the strengthened glass.

The present invention further relates to a glass:

 having an average coefficient of thermal expansion of from $20\times10^{-7}$ to $50\times0^{-7}$/°C at 50 to 350°C,
 having a glass transition temperature of 560°C or higher,
 having a thickness of from 2 to 15 mm,
 containing, as represented by mole percentage based on oxides, $SiO_2$: from 65 to 75%, $Al_2O_3$: from 5 to 20%, $B_2O_3$: from 0 to 25%, MgO: from 0.1 to 10%, CaO: from 0.1 to 10%, ZnO: from 0 to 5%, $Li_2O$: from 0.1 to 2.5%, $Na_2O$: from 0 to 1.5% and $ZrO_2$: from 0 to 2.5%, and
 containing, as represented by weight percentage based on oxides, $Fe_2O_3$: from 0.0001 to 0.2%.

The present invention further relates to a heating cooker having the strengthened glass as a top plate.

The present invention further relates to a kitchen counter including the heating cooker.

ADVANTAGEOUS EFFECTS OF INVENTION

The strengthened glass of the present invention has excellent heat resistance and additionally has surface compressive stress being difficult to be decreased even though exposed to high temperature for a long period of time.

DESCRIPTION OF EMBODIMENTS

The present invention is described in detail below. However, the present invention should not be construed as being limited to the following embodiments, and can be carried out by optionally modifying in the scope that does not deviate the gist of the present invention. In the present description, the expression "from ... to" showing a numerical range is used in the meaning of including the numerical values indicated before and after the "to" as the lower limit and the upper limit.

A strengthened glass according to one embodiment of the present invention (hereinafter referred to as a "first embodiment") is a strengthened glass obtained by physically strengthening a glass having an average coefficient of thermal expansion of from $20\times10^{-7}$ to $50\times10^{-7}$/°C at 50 to 350°C and a glass transition temperature of 560°C or higher.

In the strengthened glass according to the first embodiment, the average coefficient ($\alpha$) of thermal expansion of the glass is from $20\times10^{-7}$ to $50\times10^{-7}$/°C in a temperature range of from 50 to 350°C. When the $\alpha$ is $20\times10^{-7}$/°C or more, compressive stress is easy to be generated on a glass surface by physical strengthening. The $\alpha$ is preferably $24\times10^{-7}$/°C or more, more preferably $27\times10^{-7}$/°C or more, still more preferably $29\times10^{-7}$/°C or more, and particularly preferably $30\times10^{-7}$/°C or more. On the other hand, when the $\alpha$ is $50\times10^{-7}$/°C or less, stress relaxation when exposed to high temperature is decreased, and breakage of the glass by thermal shock can be prevented. The $\alpha$ is preferably $45\times10^{-7}$/°C or less, more preferably $40\times10^{-7}$/°C or less, still more preferably $35\times10^{-7}$/°C or less and particularly preferably $32\times10^{-7}$/°C or less.

The average coefficient ($\alpha$) of the glass can be measured by a thermomechanical analyzer (TMA).

Furthermore, in the strengthened glass according to the first embodiment, a glass transition temperature (Tg) of the glass is 560°C or higher. When the Tg is 560°C or higher, relaxation of surface compressive stress introduced by physical strengthening is reduced even when used at high temperature for a long period of time, and the surface compressive stress is difficult to be decreased. From this standpoint, the Tg is preferably 590°C or higher, preferably 650°C or higher, more preferably 690°C or higher, still more preferably 740°C or higher, particularly preferably 760°C or higher, and most preferably 810°C or higher.

The glass transition temperature (Tg) of the glass can be measured by a thermomechanical analyzer (TMA).

On the other hand, the Tg is preferably 900°C or lower. When physical strengthening such as strengthening by air cooling is applied to the glass, the glass is heated to a temperature of Tg or higher and then rapidly cooled. In this case, when the Tg exceeds 900°C, the heating temperature is required to be high temperature higher than the Tg for physical strengthening. As a result, in physical strengthening, peripheral members such as members (jigs) supporting the glass are exposed to high temperature, and the problem may occur such that the life of the peripheral members is remarkably decreased, or expensive members having excellent heat resistance are necessary. From this standpoint, the Tg is more preferably 820°C or lower. On the other hand, in case where physical strengthening is desired to conduct inexpensively, the Tg is still more preferably 770°C or lower, still further preferably 720°C or lower, and particularly preferably 670°C or lower.

The strengthened glass according to the first embodiment has compressive stress (compressive stress layer) in the surface thereof. Compressive stress value of the surface is not particularly limited, but is preferably 5 MPa or more from the standpoint of the improvement in heat resistance. The compressive stress value is more preferably 10 MPa or more, still more preferably 15 MPa or more, and still further preferably 20 MPa or more. Furthermore, the surface compressive stress is preferably 200 MPa or less from the standpoint that even if broken, scattering of the glass is prevented and safety during use is secured. The compressive stress is more preferably 100 MPa or less, still more preferably 60 MPa or less, and still further preferably 39 MPa or less. The surface compressive stress can be measured by a surface stress measuring apparatus or a birefringence measuring apparatus.

In the strengthened glass according to the first embodiment, the composition of the glass is not particularly limited so long as it is the composition that can obtain a glass satisfying the above-described requirements. For example, the composition of the glass in a strengthened glass according to a second embodiment described hereinafter can be applied. In the strengthened glass according to the first embodiment, $R_2O$ can be contained in an amount of 5% or less so long as the glass has the average coefficient of the thermal expansion of from $20 \times 10^{-7}$ to $50 \times 10^{-7}$/°C at 50 to 350°C and the glass transition temperature of 560°C or higher.

A strengthened glass according to another embodiment of the present invention (hereinafter referred to as a "second embodiment") is a glass obtained by physically strengthening a glass containing, as represented by mole percentage based on oxides, $R_2O$: from 0 to 4% (provided that $R_2O$ is at least one of $Li_2O$, $Na_2O$ and $K_2O$), and $B_2O_3$: from 5 to 25%.

The composition of the glass in the strengthened glass according to the second embodiment is described below. Unless otherwise indicated, the content (%) of each component is represented by mole percentage on oxide basis. However, the content of $Fe_2O_3$ described hereinafter is represented by weight percentage on oxide basis, and the total content of at least one selected from the group consisting of a chloride, $SnO_2$ and $SO_3$ is represented by weight percentage.

$R_2O$ is a component effective to accelerate the melting of glass raw materials and adjust a coefficient of thermal expansion, a viscosity and the like. Furthermore, $R_2O$ is a component effective to improve electrical conductivity at high temperature of the glass. The $R_2O$ is at least one of $Li_2O$, $Na_2O$ and $K_2O$. When the $R_2O$ content is 4% or less, a coefficient of thermal expansion of the glass can be reduced, and as a result, stress relaxation when exposed to high temperature can be reduced. Additionally, even when exposed to high temperature for long period of time, relaxation of surface compressive stress introduced by physical strengthening is reduced, and surface compressive stress is difficult to be decreased. The $R_2O$ content is preferably 3% or less, and more preferably 2% or less. $R_2O$ may not be contained (the content may be 0%). However, $R_2O$ may be contained in order to improve melting character of the glass, and the $R_2O$ content in this case is preferably 0.5% or more, more preferably 1% or more, and still more preferably 1.5% or more.

$Li_2O$ is a component effective to accelerate the melting of glass raw materials, adjust a coefficient of thermal expansion, a viscosity and the like, and increase stress residual ratio while maintaining decreased viscosity. Furthermore, $Li_2O$ is a component effective to improve electrical conductivity at high temperature of the glass. In order to decrease a thermal expansion coefficient of the glass and decrease stress relaxation when exposed to high temperature, $Li_2O$ is preferably 4% or less, more preferably 3% or less, still more preferably 2.5% or less, and still further preferably 2% or less. $Li_2O$ may not be contained (the content may be 0%). However, $Li_2O$ may be contained in order to control a thermal expansion coefficient of the glass and adjust a glass transition temperature. The $Li_2O$ content in this case is preferably 0.1% or more, more preferably 0.5% or more, still more preferably 1% or more, and particularly preferably 1.5% or more.

$Na_2O$ is a component effective to accelerate the melting of glass raw materials, and adjust a coefficient of thermal expansion, a viscosity and the like. Furthermore, $Na_2O$ is a component effective to improve electrical conductivity at high temperature of the glass. In order to decrease a thermal expansion coefficient of the glass and decrease stress relaxationwhen exposed to high temperature, $Na_2O$ is preferably 3% or less, and more preferably 2% or less. $Na_2O$ may not be contained (the content may be 0%). However, $Na_2O$ may be contained in order to decrease a viscosity of the glass, thereby increasing productivity. In this case, the $Na_2O$ content is preferably 0.1% or more, more preferably 0.5% or more, still more preferably 1% or more, and particularly preferably 1.5% or more.

$K_2O$ is a component effective to accelerate the melting of glass raw materials, and adjust a coefficient of thermal expansion, a viscosity and the like. Furthermore, $K_2O$ is a component effective to improve electrical conductivity at high temperature of the glass. In order to decrease a coefficient of thermal expansion of the glass and decrease stress relaxation when exposed to high temperature, $K_2O$ is preferably 2% or less, more preferably 1% or less, still more preferably 0.5% or less, and particularly preferably 0.2% or less. $K_2O$ may not be contained (the content may be 0%). However, $K_2O$ may be contained in order to decrease a viscosity of the glass, thereby increasing productivity. The $K_2O$ content in this case is preferably 0.1% or more, more preferably 0.5% or more, still more preferably 1% or more, and particularly preferably 1.5% or more.

$Li_2O/(Na_2O+K_2O)$ is preferably 1.0 or less from the standpoints of material cost, glass stability and adhesiveness with an inorganic ink. $Li_2O/(Na_2O+K_2O)$ is more preferably 0.9 or less, and still more preferably 0.85 or less.

$B_2O_3$ is a component effective to adjust a coefficient of thermal expansion of the glass and may be contained. When $B_2O_3$ is contained in order to control a coefficient of thermal expansion of the glass and control a viscosity or adjust a glass transition temperature, the content is preferably 1% or more, more preferably 3% or more, still more preferably 5% or more and still further preferably 7% or more. When a viscosity is particularly desired to be controlled, the content is yet further preferably 9% or more, and particularly preferably 11% or more. On the other hand, in order to improve weather resistance of the glass, the $B_2O_3$ content is 25% or less, preferably 20% or less, still more preferably 15% or less, and still further preferably 10% or less. When the glass is desired to have particularly high glass transition temperature, the $B_2O_3$ content is yet further preferably 4.7% or less.

$SiO_2$ is a main component of the glass. In order to enhance weather resistance of the glass and increase a coefficient of thermal expansion of the glass, the $SiO_2$ content is preferably 55% or more, more preferably 60% or more, still more preferably 65% or more, still further preferably 68% or more, and particularly preferably 70% or more. In order to decrease a viscosity of the glass and enhance productivity, the $SiO_2$ content is preferably 80% or less, more preferably 75% or less, still more preferably 73% or less, and still further preferably 71% or less.

In order to enhance weather resistance of the glass and additionally increase a glass transition temperature of the glass, $Al_2O_3$ may be contained in an amount of preferably 4% or more, more preferably 7% or more, still more preferably 9% or more, and still further preferably 10.5% or more. On the other hand, in order to enhance acid resistance of the glass, the $Al_2O_3$ content is preferably 20% or less, more preferably 14% or less, still more preferably 12.5% or less, and still further preferably 11% or less. When production stability of the glass is desired to enhance, the $Al_2O_3$ content is particularly preferably 10% or less.

RO (herein, RO is at least one of MgO, CaO, SrO and BaO) may be contained in an amount of preferably 5% or more, more preferably 8% or more, and still more preferably 9% or more in order to decrease a viscosity of the glass and enhance productivity. In order to control an expansion coefficient of the glass, decrease a devitrification temperature and enhance productivity, the RO content is preferably 15% or less, more preferably 12% or less, and still more preferably 10% or less.

MgO may be contained in order to decrease a viscosity of the glass and enhance productivity while controlling an expansion coefficient. The MgO content in this case is preferably 1% or more, more preferably 3% or more, and still more preferably 5% or more. On the other hand, in order to decrease an expansion coefficient of the glass, decrease a devitrification temperature of the glass and enhance productivity, the MgO content is preferably 10% or less, more preferably 8% or less, and still more preferably 7% or less.

CaO may be contained in order to decrease a viscosity of the glass and enhance productivity while controlling an expansion coefficient. The CaO content in this case is preferably 0.5% or more, more preferably 1% or more, and still more preferably 2% or more. On the other hand, in order to decrease a devitrification temperature of the glass and enhance productivity, the CaO content is preferably 10% or less, more preferably 8% or less, still more preferably 6% or less, and most preferably 4% or less.

SrO may be contained in order to decrease a devitrification temperature of the glass and enhance productivity. The SrO content in this case is preferably 0.5% or more, more preferably 1% or more, and still more preferably 2.5% or more. On the other hand, in order to decrease a devitrification temperature of the glass and enhance productivity, the SrO content is preferably 7% or less, more preferably 5% or less, and still more preferably 3% or less.

BaO may be contained in order to increase a glass transition temperature, decrease a devitrification temperature of the glass and enhance productivity. The BaO content in this case is preferably 0.5% or more, more preferably 1% or more, and still more preferably 2% or more. On the other hand, in order to decrease a thermal expansion of the glass, decrease a devitrification temperature of the glass and enhance productivity, the BaO content is preferably 7% or less, more preferably 5% or less, and still more preferably 3% or less.

$ZrO_2$ may be contained in order to improve chemical resistance of the glass. The $ZrO_2$ content in this case is preferably 0.5% or more, more preferably 1% or more, and still more preferably 2% or more. On the other hand, in order to decrease a devitrification temperature of the glass and enhance productivity, the $ZrO_2$ content is preferably 5% or less, more preferably 4% or less, and still more preferably 3% or less.

ZnO may be contained in order to decrease a high temperature viscosity of the glass and enhance productivity. The ZnO content in this case is preferably 0.5% or more, more preferably 1% or more, and most preferably 2.7% or more. On the other hand, in order to decrease a coefficient of thermal expansion of the glass and additionally decrease a devitrification temperature of the glass, thereby enhancing productivity, the ZnO content is preferably 10% or less, more preferably 5% or less, and still more preferably 3% or less.

$Fe_2O_3$ may be contained in order to improve clarity of the glass and control a temperature of a bottom side of a melting furnace without deteriorating color tone of the glass. The $Fe_2O_3$ content in this case is, as represented by weight percentage based on oxides, preferably 0.0001 % or more, more preferably 0.001% or more, and still more preferably 0.01% or more. On the other hand, in order to maintain hue of the glass and adjust color difference ∆E when the strengthened glass further having an organic printed layer containing inorganic filler was compared with only the organic printed layer containing inorganic filler, to 10 or less, the $Fe_2O_3$ content is, as represented by weight percentage based on oxides, preferably 0.2% or less, more preferably 0.15% or less, still more preferably 0.1% or less, and most preferably 0.05% or less.

$P_2O_5$ is a component effective to prevent crystallization and devitrification of the glass, thereby stabilizing the glass, and may be contained. In order to satisfactorily exhibit the above effects, the $P_2O_5$ content is preferably 1% or more, more preferably 2.5% or more, and still more preferably 3.5% or more. On the other hand, when the $P_2O_5$ content is 10% or less, high temperature viscosity of the glass is not too high and the glass can be stabilized. The $P_2O_5$ content is preferably 8% or less, and more preferably 6% or less.

The glass of this embodiment typically consists essentially of the above-described components, but may contain other components ($TiO_2$ and the like) in a range that does not impair the object of the present invention up to the total content of 2.5 mol%.

Furthermore, the glass may appropriately contain $SO_3$, a chloride, a fluoride, a halogen, $SnO_2$, $Sb_2O_3$, $As_2O_3$ and the like as a refining agent when melting a glass. Furthermore, for the adjustment of hue, the glass may contain a coloring component such as Ni, Co, Cr, Mn, V, Se, Au, Ag or Cd. When the glass is desired to be positively colored, the glass may contain a coloring component such as Fe, Ni, Co, Cr, Mn, V, Se, Au, Ag or Cd in a range of 0.1% or more.

Of the above-described other components, when the glass contains at least one selected from the group consisting of a chloride, $SnO_2$ and $SO_3$, the total content thereof is, in weight percentage, preferably 0.0001% or more, more preferably 0.0005% or more, and still more preferably 0.001% or more from the standpoint of clarity. On the other hand, in order to avoid affecting properties of the glass, the total content is, in weight percentage, preferably 2.0% or less, more preferably 1.5% or less, and still more preferably 1.0% or less.

The strengthened glass according to the second embodiment preferably has a compressive stress layer having compressive stress of from 5 to 200 MPa in the surface thereof. The technical meaning is the same as in the strengthened glass according to the first embodiment.

In the strengthened glass according to the second embodiment, an average coefficient ($\alpha$) of thermal expansion at 50 to 350°C of the glass is preferably from $20 \times 10^{-7}$ to $50 \times 10^{-7}$/°C. Furthermore, in the strengthened glass according to the second embodiment, a glass transition temperature (Tg) of the glass is preferably 560°C or higher. Those technical meanings are the same as in the strengthened glass according to the first embodiment.

In the glass of the present invention, the electrical conductivity $\sigma$ at temperature T3 at which a viscosity is $10^3$ dPa·s is preferably 2.5 ms/m or more as the value of log $\sigma$. When the electrical conductivity $\sigma$ at the temperature T3 is 2.5 ms/m or more as the value of log $\sigma$, electric melting can be well applied in a melting process of the glass, and the glass can be mass-produced with good energy efficiency. The electrical conductivity $\sigma$ at the temperature T3 of the glass is more preferably 2.6 ms/m or more as the value of log $\sigma$, and still more preferably 2.8 ms/m or more as the value of log $\sigma$. The upper limit of the electrical conductivity $\sigma$ at the temperature T3 of the glass is not particularly limited, but is generally 5.0 ms/m or less as the value of log $\sigma$. When the electrical conductivity $\sigma$ at the temperature T3 of the glass is greater than 5.0 ms/m as the value of log $\sigma$, the quantity of electricity necessary for heating is increased, and energy efficiency is deteriorated. The electrical conductivity $\sigma$ at the temperature T3 of the glass can be measured by a four-terminal method.

From the standpoint of stability when manufacturing a glass, a devitrification temperature ($T_L$) of the glass is preferably lower than the temperature T3 at which a viscosity is $10^3$ dPa·s. In this case, $T3-T_L$ is preferably 50°C or more, more preferably 100°C or more, and still more preferably 150°C or more. The devitrification temperature means the lowest temperature at which crystals are not formed inside the glass when a glass is maintained at specific temperature for 12 hours.

A load of Vickers indenter at which an incidence of cracking is 50% when a glass having a mirror polished surface and having a thickness of 1 mm is used as the glass and indentation is formed on the glass or on a strengthened glass obtained by physically strengthening the glass, is preferably 100 gf or more, more preferably 200 gf or more, still more preferably 400 gf or more, and still further preferably 700 gf or more. When the load is 100 gf or more, the glass or strengthened glass thereof has excellent scratch resistance, and as a result, can be suitably used in various uses in which the glass or strengthened glass thereof is desired to be difficult to be scratched. Measurement method of the rate of occurrence of cracks is described in detail in examples.

The glass preferably has a thickness of 2 mm or more. When the thickness of the glass is less than 2 mm, surface compressive stress generated by physical strengthening may not be increased. The thickness of the glass is more preferably 2.5 mm or more, and still more preferably 3 mm or more. On the other hand, the upper limit of the thickness of the glass is not particularly limited, but is generally 15 mm or less, and preferably 10 mm or less. The thickness of the glass is substantially the same before and after physical strengthening.

Preferred embodiment as a glass to be subjected to a strengthening treatment (sometimes referred to as a glass for strengthening) includes a glass having an average coefficient of thermal expansion at 50 to 350°C of from $20 \times 10^{-7}$ to $50 \times 10^{-7}$/°C, having a glass transition temperature of 560°C or higher, having a thickness of from 2 to 15 mm, containing, as represented by mole percentage based on oxides, $SiO_2$: from 65 to 75%, $Al_2O_3$: from 5 to 20%, $B_2O_3$: from 0 to 25%, MgO: from 0.1 to 10%, CaO: from 0.1 to 10%, ZnO: from 0 to 5%, $Li_2O$: from 0.1 to 2.5%, $Na_2O$: from 0 to 1.5% and $ZrO_2$: from 0 to 2.5%, and containing, as represented by weight percentage based on oxides, $Fe_2O_3$: from 0.0001 to 0.2%.

In the strengthened glass of the present invention, the stress residual ratio after treated at 400°C for 12 hours is preferably 75% or more, more preferably 80% or more, and still more preferably 85% or more. The upper limit of the stress residual ratio after treated at 400°C for 12 hours is not particularly limited. Higher stress residual ratio is preferred, and the stress value ratio is, for example, 99.9%. The stress residual ratio can be obtained as follows.

A disk having the entire mirror surface is prepared from a glass before forming a compressive stress layer. Using the disk prepared, a photoelastic constant is obtained by a method of compression on disk. Flat plate-shaped or disk-shaped sample is hung on a jig prepared by SUS bar using a platinum wire, and maintained at a temperature 200°C higher than the glass transition temperature for 10 minutes. After heating, the glass is taken out together with the jig and the glass is rapidly cooled in the atmosphere. The rapidly cooled glass thus prepared is cut and the cut surface is optically polished and retardation is measured by a birefringence measuring device. The retardation value measured is divided by the photoelastic constant and the glass thickness to obtain the generated stress (surface compressive stress), and this is defined as "surface compressive stress before relaxation".

On the other hand, the glass having compressive stress on the surface thereof obtained above is subjected to a heat treatment under the condition of 400°C and 12 hours and then taken out in the atmosphere. Retardation of the glass after the heat treatment is measured by a birefringence measuring device. The measured value of the retardation is divided by a photoelastic constant and a glass thickness to obtain surface compressive stress after the heat treatment, and the surface compressive stress obtained is defined as "surface compressive stress after relaxation".

The stress residual ratio is calculated based on the following formula.

$$\text{Stress residual ratio} = \{(\text{surface compressive stress after relaxation}) / (\text{surface compressive stress before relaxation})\} \times 100 \ (\%)$$

In the strengthened glass of the present invention, the stress residual ratio after treated at 400°C for 21 hours is preferably 60% or more, more preferably 70% or more, and still more preferably 75% or more. The upper limit of the stress residual ratio after treated at 400°C for 21 hours is not particularly limited. Higher stress residual ratio is preferred, and the stress residual ratio is, for example, 99.9%. The stress residual ratio after treated at 400°C for 21 hours can be measured in the same manner as in the stress residual ratio after treated at 400°C for 12 hours, except for changing the heat treatment time to 21 hours.

The strengthened glass of the present invention is that the stress residual ratio after treated at 500°C for 21 hours is preferably 20% or more, more preferably 30% or more, and still more preferably 40% or more. The upper limit of the stress residual ratio after treated at 500°C for 21 hours is not particularly limited. Higher stress residual ratio is preferred, and the stress residual ration is, for example, 60%. The stress residual ratio after treated at 500°C for 21 hours can be measured in the same manner as in the stress residual ratio after treated at 400°C for 12 hours, except for changing the heat treatment temperature to 500°C and changing the heat treatment time to 21 hours.

The strengthened glass of the present invention is that the stress residual ratio after treated at 600°C for 21 hours is preferably 0.1% or more, more preferably 1% or more, still more preferably 2% or more, and still further preferably 3% or more. The upper limit of the stress residual ratio after treated at 600°C for 21 hours is not particularly limited. Higher stress residual ratio is preferred, and the stress residual ratio is, for example, 50%. The stress residual ratio after treated at 600°C for 21 hours can be measured in the same manner as in the stress residual ratio after treated at 400°C for 12 hours, except for changing the heat treatment temperature to 600°C and changing the heat treatment time to 21 hours.

In the strengthened glass of the present invention, when three strengthened glasses each having a size of 100 mm vertical × 100 mm horizontal × 4 mm thick are prepared, only the central part having a diameter of 10 mm on one main surface of the respective strengthened glasses is heated to 400°C for 150 hours and then the respective strengthened glasses are immediately put in 25°C water, it is preferable that internal cracks starting from the portion heated (heated part) do not occur in all of three strengthened glasses. More preferably, the internal cracks do not occur just after heating at 400°C for 300 hours, and most preferably, the internal cracks do not occur just after heating at 400°C for 1,000 hours. Such a strengthened glass appropriately prevents the occurrence of internal cracks due to rapid temperature change, and can be therefore used safely.

In the present invention, the temperature being an example of standard when melting a glass, that is, the temperature T2 at which a viscosity of the glass is $10^2$ dPa·s, is preferably 1,800°C or lower, more preferably 1,750°C or lower, and still more preferably 1,700°C or lower. When the temperature T2 is 1,800°C or lower, homogeneity and productivity of the glass are satisfactory.

In the glass of the present invention, the temperature being a reference of clarity of a glass, that is, the temperature T3 at which a viscosity of a glass is $10^3$ dPa·s, is preferably 1,600°C or lower, more preferably 1,550°C or lower, and still more preferably 1,500°C or lower. When the temperature T3 is 1,600°C or lower, defoaming property of the glass is satisfactory.

In the present invention, the temperature becoming an example of a standard when forming a glass, that is, the temperature T4 at which a viscosity of the glass is $10^4$ dPa·s, is preferably 1,350°C or lower, more preferably 1,300°C or lower, and still more preferably 1,250°C or lower. When the temperature T4 is 1,350°C or lower, formability of a glass is satisfactory.

The temperature T2, temperature T3 and temperature T4 can be measured using a rotary viscometer.

The strengthened glass of the prevent invention is not glass ceramics, but is a transparent glass. Therefore, in case of assuming application to, for example, a top plate of a heating cooker, the strengthened glass may further have an organic printed layer containing, for example, an ink containing inorganic filler on the main surface thereof in order to shield the inside of the heating cooker. The organic printed layer containing inorganic filler is typically provided on a main surface (back surface) opposite another main surface contacting an object to be heated, in the top plate (strengthened glass) of a heating cooker.

Color tone of the organic printed layer containing inorganic filler is not particularly limited. However, a feeling of unity of color tone can be given by harmonizing with a color tone of a kitchen counter arranged around a heating cooker, and this is preferred.

In this case, in the strengthened glass further having an organic printed layer containing inorganic filler, it is preferable that color tone difference ΔE when compared with only the organic printed layer containing inorganic filler is preferably 10 or less, more preferably 7 or less, and most preferably 3.5 or less. The color tone difference ΔE of 10 or less indicates that the strengthened glass is substantially colorless and transparent and the color tone difference due to the presence or absence of the strengthened glass is sufficiently small. Therefore, the color tone of the organic printed layer containing inorganic filler can be directly utilized, and a feeling of unity with peripheral color tone is easy to be obtained. The color tone difference ΔE can be measured, for example, as follows.

White reference plate is prepared, and color tone (L1*, a1* and b1*) is evaluated by i7 manufactured by X-right. Next, a glass substrate (strengthened glass) having a thickness of 4 mm is placed on the white reference plate, and color tone (L2*, a2* and b2*) of the white reference plate is evaluated through the glass substrate. Color tone difference of those is calculated by the following formula.

$$\Delta E = ((L1^* - L2^*)^2 + (a1^* - a2^*)^2 + (b1^* - b2^*)^2)^{1/2}$$

The strengthened glass of the present invention may further have a ceramic printed layer for the purpose of giving various indications and decorations and preventing scratches. In case of assuming application to, for example, a top plate of a heating cooker, the ceramic printed layer is typically provided on a main surface (front surface) at the side contacting an object to be heated, that is, a main surface opposite a surface on which the organic printed layer containing inorganic filler is provided. The ceramic printed layer may be continuously formed, and may be formed in various discontinuous states such as a dot shape. In other words, the ceramic printed layer may be provided on the entire surface of the main surface of the strengthened glass, and may be provided on only a part of the main surface.

A method for manufacturing the strengthened glass according to the present invention is not particularly limited, and a method for forming a molten glass is not particularly limited. For example, the strengthened glass can be manufactured as follows.

Glass raw materials are appropriately prepared and heated to about 1,600 to 1,650°C to melt those. The resulting melt is defoamed and homogenized by stirring or the like, and formed into a plate shape by the conventional float process, downdraw process (fusion process or the like), press process, rollout process or the like, or cast to form into a block shape. After slow cooling, the shaped product is cut into a desired size, and a glass (glass plate) is manufactured. Polishing is applied as necessary, but in addition to the polishing or in place of the polishing, the surface of the glass plate can be treated with a fluorine agent. Considering stable manufacturing of the glass plate, a float process or a downdraw process is preferably used, and particularly considering the manufacturing of a large-sized glass plate, a float process is preferably used. In applying polishing to the glass plate, the polishing is preferably applied such that flatness is 1.0 mm or less from the standpoints of manufacturing stability, product appearance and the like.

Subsequently, the glass plate obtained is heated to a temperature higher than a glass transition temperature Tg, and preferably a temperature from 50 to 200°C higher than Tg, and then rapidly cooled by, for example, blowing a cooling medium such as air, By this, the vicinity of the surface is rapidly cooled to a strain point or lower and solidified, and the difference in expansion to the inside in which cooling is slow is increased, thereby the inside is relatively greatly shrunk as compared with the vicinity of the surface, thereby giving compressive stress to the vicinity of the surface. The heating is preferably conducted at a temperature from 50 to 100°C higher than Tg from the standpoint of flatness of a product. Wind pressure of a cooling medium blowing to a glass plate is not particularly limited, but in order to appropriately rapidly cooling the heated glass plate, the maximum wind pressure is preferably 2 KPa or more.

In the strengthened glass according to the present invention, when maintained at high temperature, stress after stress relaxation can be compensated by conducting a heat treatment or chemical strengthening, together with physical strengthening. Alternatively, chemical strengthening may be carried out as a substitute of physical strengthening to the glass (glass for strengthening).

In case of assuming the application of the strengthened glass according to the present invention to, for example, a top plate of a heating cooker, a ceramic printed layer may be formed on a main surface (front surface) at the side contacting an objected to be heated in the top plate by performing ceramic printing. The ceramic printing can be conducted by coating a glass plate with a past material containing an inorganic pigment powder, a glass powder and the like, followed by baking. The baking process may be conducted separately from the heating of the glass plate in the physical strengthening treatment, but is more preferably conducted simultaneous with the heating of the glass plate in the physical strengthening treatment from the standpoint of reduction in the number of process.

In case of assuming the application of the strengthened glass according to the present invention to, for example, a top plate of a heating cooker, an organic printed layer containing organic filler may be formed on a main surface (back surface) opposite the main surface contacting an objected to be heated in the top plate by performing organic printing containing inorganic filler. The organic printing containing inorganic filler can be conducted by, for example, coating the glass plate with various inks, followed by heating and drying as necessary. The process of performing the organic printing can be conducted, for example, after the physical strengthening treatment of the glass plate, but is not limited to this embodiment.

The strengthened glass of the present invention as described above has excellent heat resistance and additionally has surface compressive stress being difficult to be decreased and therefore can be suitably used in various uses such as a top plate of a heater such as a heating cooker, a window material of a high temperature furnace or a building material requiring fireproof property. The strengthened glass of the prevent invention is not glass ceramics, but is a transparent glass. Therefore, the strengthened glass has the merit that the glass is easy to be harmonized with ambient color tone and design. Depending on the ambient color tone and design, a coloring component may be appropriately contained as described above.

The present invention further provides a heating cooker including the above-described strengthened glass as a top plate. The heating cooker may be a heating cooker of a gas combustion system (gas heating cooker) as well as a heating cooker of induction heating system (induction heating cooker). Furthermore, according to the present invention, a kitchen counter including the heating cooker is provided. In the kitchen counter, the strengthened glass as a top plate of a heating cooker may be distinct from a work top (top plate) of the kitchen counter, but the top plate of a heating cooker and the work top (top plate) of the kitchen counter may be an integrated product. In other words, the strengthened glass may have combined functions of the top plate of a heating cooker and the work top (top plate) of a kitchen counter.

EXAMPLES

The present invention is specifically described below by reference to examples and comparative examples, but the present invention is not construed as being limited to those.

Raw materials were prepared so as to have compositions shown in Tables 1 to 3 in mole percentage or weight percentage on oxide basis, and placed in a platinum crucible. The crucible was put into a resistance heating type electric furnace of 1,650°C and the raw materials were melted for 2 hours, followed by defoaming and homogenizing. The compositions shown in Tables 1 to 3 are described by rounding off significant figurers. Therefore, the total of the content of each component in each glass composition may not be 100%. Furthermore, each glass composition including Cl is a formulation composition.

The glass obtained was poured into a mold material, maintained at a temperature of Tg+50°C for 1 hours and then cooled to room temperature in a rate of 1°C/min. Thus, a glass block was obtained. The glass block was cut and polished, followed by mirror polishing both surfaces thereof. Thus, a glass of each example was obtained.

(Average coefficient of thermal expansion, glass transition temperature, temperature T2, temperature T3 and temperature T4)

Average coefficient ($\alpha$) of thermal expansion at 50 to 350°C (unit: °C$^{-1}$) and glass transition temperature (Tg) (unit: °C) were measured by a thermomechanical analyzer (TMA) regarding the obtained glass. Furthermore, temperature T2 at which a viscosity of a glass is $10^2$ dPa·s, temperature T3 at which a viscosity of a glass is $10^3$ dPa·s and temperature T4 at which a viscosity of a glass is $10^4$ dPa·s were measured using a rotary viscometer. The results are shown in Tables 1 to 3. The blank and "N.D." mean "not determined". The underlined value is a calculated value.

[Table 1]

Table 1

| Example No. | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Glass composition (mol%) | $SiO_2$ | 60.0 | 62.0 | 60.0 | 63.0 | 61.0 | 62.0 | 61.0 | 63.0 | 62.0 | 66.0 | 67.0 |
| | $Al_2O_3$ | 10.0 | 10.0 | 12.0 | 8.0 | 8.0 | 8.0 | 8.0 | 8.0 | 10.0 | 8.0 | 8.0 |
| | $B_2O_3$ | 20.0 | 18.0 | 16.0 | 22.0 | 22.0 | 22.0 | 22.0 | 20.0 | 20.0 | 15.0 | 13.0 |
| | MgO | 5.0 | 4.0 | 9.0 | 0.0 | 4.0 | 2.0 | 4.0 | 2.0 | 1.0 | 5.0 | 5.0 |
| | CaO | 5.0 | 6.0 | 0.0 | 3.0 | 4.0 | 4.0 | 2.0 | 7.0 | 6.0 | 5.0 | 5.0 |
| | SrO | 0.0 | 0.0 | 3.0 | 3.0 | 0.0 | 2.0 | 2.0 | 0.0 | 1.0 | 0.0 | 0.0 |
| | BaO | 0.0 | 0.0 | 0.0 | 1.0 | 1.0 | 0.0 | 1.0 | 0.0 | 0.0 | 0.0 | 0.0 |
| | ZnO | 0.0 | 0.0 | 0.0 | 0.0 | 0.0 | 0.0 | 0.0 | 0.0 | 0.0 | 0.0 | 0.0 |
| | $Li_2O$ | 0.0 | 0.0 | 0.0 | 0.0 | 0.0 | 0.0 | 0.0 | 0.0 | 0.0 | 0.0 | 0.0 |
| | $Na_2O$ | 0.0 | 0.0 | 0.0 | 0.0 | 0.0 | 0.0 | 0.0 | 0.0 | 0.0 | 1.0 | 2.0 |
| | $K_2O$ | 0.0 | 0.0 | 0.0 | 0.0 | 0.0 | 0.0 | 0.0 | 0.0 | 0.0 | 0.0 | 0.0 |
| | $Fe_2O_3$ | 0.0 | 0.0 | 0.0 | 0.0 | 0.0 | 0.0 | 0.0 | 0.0 | 0.0 | 0.0 | 0.0 |
| | $SnO_2$ | 0.0 | 0.0 | 0.0 | 0.0 | 0.0 | 0.0 | 0.0 | 0.0 | 0.0 | 0.0 | 0.0 |
| | $ZrO_2$ | 0.0 | 0.0 | 0.0 | 0.0 | 0.0 | 0.0 | 0.0 | 0.0 | 0.0 | 0.0 | 0.0 |
| | Total | 100.0 | 100.0 | 100.0 | 100.0 | 100.0 | 100.0 | 100.0 | 100.0 | 100.0 | 100.0 | 100.0 |
| | RO | 10.0 | 10.0 | 12.0 | 7.0 | 9.0 | 8.0 | 9.0 | 9.0 | 8.0 | 10.0 | 10.0 |

(continued)

| Example No. | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Glass composition (wt%) | $SiO_2$ | 55.5 | 57.3 | 54.5 | 56.0 | 55.9 | 56.6 | 55.1 | 58.5 | 56.3 | 62.3 | 63.4 |
| | $Al_2O_3$ | 15.7 | 15.7 | 18.5 | 12.1 | 12.5 | 12.4 | 12.3 | 12.6 | 15.4 | 12.8 | 12.8 |
| | $B_2O_3$ | 21.4 | 19.3 | 16.8 | 22.6 | 23.4 | 23.3 | 23.0 | 21.5 | 21,0 | 16.4 | 14.2 |
| | MgO | 3.1 | 2.5 | 5.5 | 0.0 | 2.5 | 1.2 | 2.4 | 1.2 | 0.6 | 3.2 | 3.2 |
| | CaO | 4.3 | 5.2 | 0.0 | 2.5 | 3.4 | 3.4 | 1.7 | 6.1 | 5.1 | 4.4 | 4.4 |
| | SrO | 0.0 | 0.0 | 4.7 | 4.6 | 0.0 | 3.1 | 3.1 | 0.0 | 1.6 | 0.0 | 0.0 |
| | BaO | 0.0 | 0.0 | 0.0 | 2.3 | 2.3 | 0.0 | 2.3 | 0.0 | 0.0 | 0.0 | 0.0 |
| | ZnO | 0.0 | 0.0 | 0.0 | 0.0 | 0.0 | 0.0 | 0.0 | 0.0 | 0.0 | 0.0 | 0.0 |
| | $Li_2O$ | 0.0 | 0.0 | 0.0 | 0.0 | 0.0 | 0.0 | 0.0 | 0.0 | 0.0 | 0.0 | 0.0 |
| | $Na_2O$ | 0.0 | 0.0 | 0.0 | 0.0 | 0.0 | 0.0 | 0.0 | 0.0 | 0.0 | 1.0 | 2.0 |
| | $K_2O$ | 0.0 | 0.0 | 0.0 | 0.0 | 0.0 | 0.0 | 0.0 | 0.0 | 0.0 | 0.0 | 0.0 |
| | $Fe_2O_3$ | 0.0 | 0.0 | 0.0 | 0.0 | 0.0 | 0.0 | 0.0 | 0.0 | 0.0 | 0.0 | 0.0 |
| | $SnO_2$ | 0.0 | 0.0 | 0.0 | 0.0 | 0.0 | 0.0 | 0.0 | 0.0 | 0.0 | 0.0 | 0.0 |
| | $ZrO_2$ | 0.0 | 0.0 | 0.0 | 0.0 | 0.0 | 0.0 | 0.0 | 0.0 | 0.0 | 0.0 | 0.0 |
| | Cl | 0.0 | 0.0 | 0.0 | 0.0 | 0.0 | 0.0 | 0.0 | 0.0 | 0.0 | 0.0 | 0.0 |
| | Total | 100.0 | 100.0 | 100.0 | 100.0 | 100.0 | 100.0 | 100.0 | 100.0 | 100.0 | 100.0 | 100.0 |
| $\alpha (\times 10^{-7}/°C)$ (350°C) | | 32.1 | 32.0 | 33.1 | 35.2 | 33.0 | 34.4 | 34.9 | 34.6 | 30.2 | 33.7 | 36.2 |
| Tg (°C) | | 671 | 672 | 689 | 630 | 647 | 624 | 644 | 653 | 660 | 647 | 641 |
| T2 (°C) | | 1575 | 1605 | | 1673 | 1613 | | | | | | |
| T3 (°C) | | 1365 | 1393 | | 1436 | 1390 | | | | | | |
| T4 (°C) | | 1207 | 1233 | | 1261 | 1223 | | | | | | |
| Devitrification at T3 | | N.D. | None | N.D. | N.D. | None | N.D. | N.D. | N.D. | N.D. | None | None |

[Table 2]

EP 3 636 605 A1

Table 2

| Example No. | | Ex. 12 | Ex. 13 | Ex. 14 | Ex. 15 | Ex. 16 | Ex. 17 | Ex. 18 | Ex. 19 | Ex. 20 | Ex. 21 |
|---|---|---|---|---|---|---|---|---|---|---|---|
| Glass composition (mol%) | $SiO_2$ | 69.7 | 69.7 | 70.0 | 69.7 | 69.7 | 69.7 | 69.5 | 67.5 | 66.1 | 83.3 |
| | $Al_2O_3$ | 8.5 | 8.0 | 9.0 | 8.3 | 8.0 | 7.7 | 9.5 | 12.0 | 11.3 | 1.4 |
| | $B_2O_3$ | 10.0 | 10.5 | 9.0 | 10.0 | 11.0 | 11.3 | 9.0 | 6.0 | 7.6 | 11.3 |
| | MgO | 7.5 | 7.5 | 5.0 | 8.5 | 9.0 | 9.0 | 9.5 | 5.5 | 5.3 | 0.0 |
| | CaO | 2.5 | 2.5 | 4.5 | 1.5 | 0.5 | 0.5 | 0.5 | 2.5 | 4.7 | 0.0 |
| | SrO | 0.0 | 0.0 | 0.0 | 0.0 | 0.0 | 0.0 | 0.0 | 0.0 | 4.9 | 0.0 |
| | BaO | 0.0 | 0.0 | 0.0 | 0.0 | 0.0 | 0.0 | 0.0 | 0.0 | 0.1 | 0.0 |
| | ZnO | 0.0 | 0.0 | 0.0 | 0.0 | 0.0 | 0.0 | 0.0 | 5.0 | 0.0 | 0.0 |
| | $Li_2O$ | 0.8 | 0.8 | 1.1 | 0.9 | 0.8 | 0.8 | 0.9 | 0.5 | 0.0 | 0.0 |
| | $Na_2O$ | 1.0 | 1.0 | 1.4 | 1.1 | 1.0 | 1.0 | 1.1 | 1.0 | 0.0 | 4.0 |
| | $K_2O$ | 0.0 | 0.0 | 0.0 | 0.0 | 0.0 | 0.0 | 0.0 | 0.0 | 0.0 | 0.0 |
| | $Fe_2O_3$ | 0.0075 | 0.0075 | 0.0075 | 0.0075 | 0.0075 | 0.0075 | 0.0075 | 0.0075 | 0.0 | 0.0 |
| | $SnO_2$ | 0.09 | 0.09 | 0.09 | 0.09 | 0.09 | 0.09 | 0.09 | 0.09 | 0.0 | 0.0 |
| | $P_2O_5$ | 0.0 | 0.0 | 0.0 | 0.0 | 0.0 | 0.0 | 0.0 | 0.0 | 0.0 | 0.0 |
| | $TiO_2$ | 0.0 | 0.0 | 0.0 | 0.0 | 0.0 | 0.0 | 0.0 | 0.0 | 0.0 | 0.0 |
| | $ZrO_2$ | 0.0 | 0.0 | 0.0 | 0.0 | 0.0 | 0.0 | 0.0 | 0.0 | 0.0 | 0.0 |
| | Total | 100.1 | 100.1 | 100.1 | 100.1 | 100.1 | 100.1 | 100.1 | 100.1 | 100.0 | 100.0 |
| | RO | 10.0 | 10.0 | 9.5 | 10.0 | 9.5 | 9.5 | 10.0 | 8.0 | 15.0 | 0.0 |

(continued)

| Example No. | | Ex. 12 | Ex. 13 | Ex. 14 | Ex. 15 | Ex. 16 | Ex. 17 | Ex. 18 | Ex. 19 | Ex. 20 | Ex. 21 |
|---|---|---|---|---|---|---|---|---|---|---|---|
| Glass composition (wt%) | $SiO_2$ | 65.9 | 66.1 | 65.7 | 66.2 | 66.2 | 66.3 | 65.7 | 61.2 | 59.7 | 80.9 |
| | $Al_2O_3$ | 13.6 | 12.9 | 14.3 | 13.4 | 12.9 | 12.4 | 15.2 | 18.5 | 17.3 | 2.3 |
| | $B_2O_3$ | 11.0 | 11.5 | 9.8 | 11.0 | 12.1 | 12.5 | 9.9 | 6.3 | 8.0 | 12.7 |
| | MgO | 4.8 | 4.8 | 3.1 | 5.4 | 5.7 | 5.7 | 6.0 | 3.3 | 3.2 | 0.0 |
| | CaO | 2.2 | 2.2 | 3.9 | 1.3 | 0.4 | 0.4 | 0.4 | 2.1 | 4.0 | 0.0 |
| | SrO | 0.0 | 0.0 | 0.0 | 0.0 | 0.0 | 0.0 | 0.0 | 0.0 | 7.6 | 0.0 |
| | BaO | 0.0 | 0.0 | 0.0 | 0.0 | 0.0 | 0.0 | 0.0 | 0.0 | 0.2 | 0.0 |
| | ZnO | 0.0 | 0.0 | 0.0 | 0.0 | 0.0 | 0.0 | 0.0 | 6.1 | 0.0 | 0.0 |
| | $Li_2O$ | 0.4 | 0.4 | 0.5 | 0.4 | 0.4 | 0.4 | 0.4 | 0.2 | 0.0 | 0.0 |
| | $Na_2O$ | 1.0 | 1.0 | 1.4 | 1.1 | 1.0 | 1.0 | 1.1 | 0.9 | 0.0 | 4.0 |
| | $K_2O$ | 0.0 | 0.0 | 0.0 | 0.0 | 0.0 | 0.0 | 0.0 | 0.0 | 0.0 | 0.0 |
| | $Fe_2O_3$ | 0.0188 | 0.0189 | 0.0187 | 0.0189 | 0.0189 | 0.0190 | 0.0188 | 0.0181 | 0.0000 | 0.0000 |
| | $SnO_2$ | 0.2 | 0.2 | 0.2 | 0.2 | 0.2 | 0.2 | 0.2 | 0.2 | 0.0 | 0.0 |
| | $P_2O_5$ | 0.0 | 0.0 | 0.0 | 0.0 | 0.0 | 0.0 | 0.0 | 0.0 | 0.0 | 0.0 |
| | $TiO_2$ | 0.0 | 0.0 | 0.0 | 0.0 | 0.0 | 0.0 | 0.0 | 0.0 | 0.0 | 0.0 |
| | $ZrO_2$ | 0.0 | 0.0 | 0.0 | 0.0 | 0.0 | 0.0 | 0.0 | 0.0 | 0.0 | 0.0 |
| | Cl | 1.0 | 1.0 | 1.0 | 1.0 | 1.0 | 1.0 | 1.0 | 1.0 | 0.0 | 0.1 |
| | Total | 100.0 | 100.0 | 100.0 | 100.0 | 100.0 | 100.0 | 100.0 | 100.0 | 100.0 | 100.0 |
| $\alpha(\times 10^{-7}/°C)$ (350°C) | | 33.0 | *34.9* | 37.0 | 35.1 | 31.8 | 32.1 | 32.4 | 31.4 | 38.0 | 31.0 |
| Tg (°C) | | 657 | *649* | 653 | 652 | 652 | 649 | 678 | 700 | 720 | 516 |
| T2 (°C) | | 1725 | | | | | 1725 | 1720 | 1657 | 1645 | 1890 |
| T3 (°C) | | 1489 | | | | | 1491 | 1480 | 1441 | 1432 | 1529 |
| T4 (°C) | | 1489 | | | | | 1308 | 1308 | 1280 | 1275 | 1277 |
| Devitrification at T3 | | None | None | None | None | N.D. | None | N.D. | None | None | N.D. |

[Table 3]

[Table 3]

Table 3

| Example No. | | Ex. 22 | Ex. 23 | Ex. 24 | Ex. 25 | Ex. 26 | Ex. 27 | Ex. 28 | Ex. 29 | Ex. 30 | Ex. 31 |
|---|---|---|---|---|---|---|---|---|---|---|---|
| Glass composition (mol%) | $SiO_2$ | 69.5 | 68.0 | 67.0 | 68.0 | 68.0 | 74.0 | 71.1 | 71.1 | 72.0 | 75.5 |
| | $Al_2O_3$ | 12.0 | 13.5 | 13.8 | 13.8 | 13.8 | 12.0 | 11.0 | 11.0 | 14.0 | 13.5 |
| | $B_2O_3$ | 6.0 | 6.0 | 6.0 | 5.0 | 5.0 | 0.0 | 6.0 | 4.0 | 0.0 | 0.0 |
| | MgO | 2.5 | 2.0 | 1.5 | 1.5 | 1.5 | 4.0 | 6.1 | 6.1 | 6.0 | 7.0 |
| | CaO | 5.5 | 6.3 | 7.5 | 7.5 | 7.5 | 4.3 | 0.0 | 2.0 | 2.3 | 2.2 |
| | SrO | 0.0 | 0.0 | 0.0 | 0.0 | 0.0 | 0.0 | 0.0 | 0.0 | 0.0 | 0.0 |
| | BaO | 0.0 | 0.0 | 0.0 | 0.0 | 0.7 | 0.9 | 0.0 | 0.0 | 0.9 | 0.0 |
| | ZnO | 3.0 | 3.0 | 2.5 | 2.5 | 2.0 | 3.0 | 4.0 | 3.5 | 3.0 | 0.0 |
| | $Li_2O$ | 0.5 | 0.5 | 0.5 | 0.5 | 0.5 | 0.8 | 0.8 | 1.0 | 0.8 | 0.8 |
| | $Na_2O$ | 1.0 | 0.7 | 0.2 | 0.2 | 0.0 | 1.0 | 1.0 | 1.3 | 1.0 | 1.0 |
| | $K_2O$ | 0.0 | 0.0 | 0.0 | 0.0 | 0.0 | 0.0 | 0.0 | 0.0 | 0.0 | 0.0 |
| | $Fe_2O_3$ | 0.0075 | 0.0075 | 0.0075 | 0.0075 | 0.0075 | 0.0075 | 0.0075 | 0.0075 | 0.0075 | 0.0075 |
| | $SnO_2$ | 0.09 | 0.09 | 0.09 | 0.09 | 0.09 | 0.09 | 0.09 | 0.09 | 0.09 | 0.09 |
| | $P_2O_5$ | 0.0 | 0.0 | 0.0 | 0.0 | 0.0 | 0.0 | 0.0 | 0.0 | 0.0 | 0.0 |
| | $TiO_2$ | 0.0 | 0.0 | 0.0 | 0.0 | 0.0 | 0.0 | 0.0 | 0.0 | 0.0 | 0.0 |
| | $ZrO_2$ | 0.0 | 0.0 | 1.0 | 1.0 | 1.0 | 0.0 | 0.0 | 0.0 | 0.0 | 0.0 |
| | Total | 100.1 | 100.1 | 100.1 | 100.1 | 100.1 | 100.1 | 100.1 | 100.1 | 100.1 | 100.1 |
| | RO | 8.0 | 8.3 | 9.0 | 9.0 | 9.7 | 9.2 | 6.1 | 8.1 | 9.2 | 9.2 |

EP 3 636 605 A1

(continued)

| Example No. | | Ex. 22 | Ex. 23 | Ex. 24 | Ex. 25 | Ex. 26 | Ex. 27 | Ex. 28 | Ex. 29 | Ex. 30 | Ex. 31 |
|---|---|---|---|---|---|---|---|---|---|---|---|
| Glass composition (wt%) | $SiO_2$ | 63.0 | 61.0 | 59.5 | 60.5 | 60.0 | 67.2 | 65.2 | 65.7 | 64.8 | 70.0 |
| | $Al_2O_3$ | 18.5 | 20.6 | 20.8 | 20.8 | 20.7 | 18.5 | 17.1 | 17.2 | 21.4 | 21.2 |
| | $B_2O_3$ | 6.3 | 6.2 | 6.2 | 5.2 | 5.1 | 0.0 | 6.4 | 4.3 | 0.0 | 0.0 |
| | MgO | 1.5 | 1.2 | 0.9 | 0.9 | 0.9 | 2.4 | 3.8 | 3.8 | 3.6 | 4.4 |
| | CaO | 4.7 | 5.3 | 6.2 | 6.2 | 6.2 | 3.6 | 0.0 | 1.7 | 1.9 | 1.9 |
| | SrO | 0.0 | 0.0 | 0.0 | 0.0 | 0.0 | 0.0 | 0.0 | 0.0 | 0.0 | 0.0 |
| | BaO | 0.0 | 0.0 | 0.0 | 0.0 | 1.6 | 2.1 | 0.0 | 0.0 | 2.1 | 0.0 |
| | ZnO | 3.7 | 3.6 | 3.0 | 3.0 | 2.4 | 3.7 | 5.0 | 4.4 | 3.7 | 0.0 |
| | $Li_2O$ | 0.2 | 0.2 | 0.2 | 0.2 | 0.2 | 0.4 | 0.4 | 0.5 | 0.4 | 0.4 |
| | $Na_2O$ | 0.9 | 0.6 | 0.2 | 0.2 | 0.0 | 0.9 | 0.9 | 1.2 | 0.9 | 1.0 |
| | $K_2O$ | 0.0 | 0.0 | 0.0 | 0.0 | 0.0 | 0.0 | 0.0 | 0.0 | 0.0 | 0.0 |
| | $Fe_2O_3$ | 0.0 | 0.0 | 0.0 | 0.0 | 0.0 | 0.0 | 0.0 | 0.0 | 0.0 | 0.0 |
| | $SnO_2$ | 0.2 | 0.2 | 0.2 | 0.2 | 0.2 | 0.2 | 0.2 | 0.2 | 0.2 | 0.2 |
| | $P_2O_5$ | 0.0 | 0.0 | 0.0 | 0.0 | 0.0 | 0.0 | 0.0 | 0.0 | 0.0 | 0.0 |
| | $TiO_2$ | 0.0 | 0.0 | 0.0 | 0.0 | 0.0 | 0.0 | 0.0 | 0.0 | 0.0 | 0.0 |
| | $ZrO_2$ | 0.0 | 0.0 | 1.8 | 1.8 | 1.8 | 0.0 | 0.0 | 0.0 | 0.0 | 0.0 |
| | Cl | 1.0 | 1.0 | 1.0 | 1.0 | 1.0 | 1.0 | 1.0 | 1.0 | 1.0 | 1.0 |
| | Total | 100.0 | 100.0 | 100.0 | 100.0 | 100.0 | 100.0 | 100.0 | 100.0 | 100.0 | 100.0 |
| $\alpha(\times 10^{-7}/°C)$ (350°C) | | 31.2 | 31.4 | 32.5 | 32.9 | 32.3 | 34.5 | 28.5 | 33.0 | 31.9 | *31.7* |
| Tg (°C) | | 701 | 719 | 731 | 744 | 752 | 771 | 694 | 704 | 772 | *785* |
| T2 (°C) | | 1703 | 1679 | 1647 | *1685* | 1676 | *1728* | *1718* | 1732 | 1744 | *1823* |
| T3 (°C) | | 1483 | 1462 | 1441 | *1473* | 1466 | *1496* | *1492* | 1508 | 1534 | *1588* |
| T4 (°C) | | 1313 | 1301 | 1287 | *1316* | 1310 | *1325* | *1319* | 1330 | 1365 | *1417* |
| Devitrification at T3 | | N.D. | None | None | None | None | None | None | None | None | None |

<Experiment 1>

(Surface compressive stress)

Surface compressive stress (generated stress) of each glass of Examples 1 to 2, 4 to 5 and 21 manufactured so as to have a thickness of 5 mm was measured as follows.

A disk having the entire mirror surface was prepared from a glass before forming a compressive stress layer. Using the disk prepared, a photoelastic constant was obtained by a method of compression on disk. Flat plate-shaped or disk-shaped sample was hung on a jig prepared by SUS bar using a platinum wire, and maintained at a temperature (physical strengthening temperature) 200°C higher than the glass transition temperature for 10 minutes. After heating, the glass was taken out together with the jig and the glass was rapidly cooled in the atmosphere. The rapidly cooled glass thus prepared was cut and the cut surface was optically polished and retardation was measured by a birefringence measuring device. The retardation value measured was divided by the photoelastic constant and the glass thickness to obtain the generated stress (surface compressive stress), and this was defined as "surface compressive stress before relaxation".

The photoelastic constant (unit: nm/cm/MPa) of the glass, physical strengthening temperature (unit: °C), retardation before relaxation (unit: nm) and surface compressive stress before relaxation (unit: MPa) are shown in Table 4.

(Stress residual ratio)

Stress residual ratio of the glass obtained when heat-treated at 400°C for 12 hours was measured as follows.

The glass (strengthened glass) having a compressive stress layer in the surface thereof obtained above was subjected to a heat treatment under the condition of 400°C and 12 hours and then taken out in the atmosphere. Retardation of the glass after the heat treatment (hereinafter referred to as "retardation after relaxation") was measured by a birefringence measuring device. The measured value of the retardation after relaxation was divided by a photoelastic constant and a glass thickness to obtain surface compressive stress after the heat treatment, and the surface compressive stress obtained was defined as "surface compressive stress after relaxation".

The stress residual ratio was calculated based on the following formula.

$$\text{Stress residual ratio} = \{(\text{surface compressive stress after relaxation}) / (\text{surface compressive stress before relaxation})\} \times 100 \ (\%)$$

Retardation after relaxation (unit: nm), surface compressive stress after relaxation (unit: MPa) and stress residual ratio (%) are shown in Table 4.

[Table 4]

Table 4

| Example No. | | Ex. 1 | Ex. 2 | Ex. 4 | Ex. 5 | Ex. 21 |
|---|---|---|---|---|---|---|
| Photoelastic constant [nm/cm/MPa] | | 34.90 | 36.90 | 42.30 | 41.40 | 34.90 |
| Experiment 1 | Sample thickness [mm] | 5 | 5 | 5 | 5 | 5 |
| | Heat treatment temperature | 871 | 872 | 830 | 847 | 716 |
| | Retardation: initial [nm] | 269 | 258 | 238 | 271 | 105 |
| | Retardation: after heating at 400°C for 12 hours [nm] | 268 | 257 | 214 | 269 | 74 |
| | Stress: initial [MPa] | 15.4 | 14.0 | 11.3 | 13.1 | 60.0 |
| | Stress: after heating at 400°C for 12 hours [MPa] | 15.3 | 13.9 | 10.1 | 13.0 | 43.0 |
| | Residual ratio: after heating at 400°C for 12 hours [%] | 99.5 | 99.6 | 89.8 | 99.3 | 70.7 |

The strengthened glass of Example 21 that did not satisfy the requirements defined in the present invention was that the stress residual ratio when heat treated at 400°C for 12 hours or longer was low. On the other hand, the strengthened glasses of Examples 1 to 2 and 4 to 5 that satisfied the requirements defined in the present invention were that the stress residual ratio when heat treated at 400°C for 12 hours or longer was high, in other words, the surface compressive stress was difficult to be decreased even though exposed to high temperature for a long period of time.

<Experiment 2>

(Surface compressive stress)

Surface compressive stress (generated stress) of each glass of Examples 5 to 6, 10 to 12, 21 to 22, 24 and 26 manufactured so as to have a thickness of 4 mm was measured as follows.
A disk having the entire mirror surface was prepared from a glass before forming a compressive stress layer. Using the disk prepared, a photoelastic constant was obtained by a disk compression method. Flat plate-shaped or disk-shaped sample was hung on a jig prepared by SUS bar using a platinum wire, and maintained at 730°C for 10 minutes. After heating, the glass was taken out together with the jig and the glass was rapidly cooled by blowing compressed air to the glass in the atmosphere. The rapidly cooled glass thus prepared was cut, the cut surface was optically polished and retardation was measured by a birefringence measuring device. The retardation value measured was divided by the photoelastic constant and the glass thickness to obtain the generated stress (surface compressive stress), and this was defined as "surface compressive stress before relaxation".
The photoelastic constant of the glass (unit: nm/cm/MPa), heat treatment temperature (unit: °C), retardation before relaxation (unit: nm) and surface compressive stress before relaxation (unit: MPa) are shown in Table 5. The photoelastic constant (nm/cm/MPa) of the glasses of Examples 6, 10 and 11 is the calculated value.

(Stress residual ratio)

Stress residual ratio of the glass obtained when heat-treated at 400°C for 21 hours, 150 hours or 300 hours was measured as follows.
The glass (strengthened glass) having a compressive stress layer in the surface thereof obtained above was subjected to a heat treatment under the condition of 400°C and a predetermined time (21 hours, 150 hours or 300 hours) and then taken out in the atmosphere. Retardation of the glass after the heat treatment (hereinafter referred to as "retardation after relaxation") was measured by a birefringence measuring device. The measured value of the retardation after relaxation was divided by a photoelastic constant and a glass thickness to obtain surface compressive stress after the heat treatment, and the surface compressive stress obtained was defined as "surface compressive stress after relaxation".
The stress residual ratio was calculated based on the following formula.

$$\text{Stress residual ratio} = \{(\text{surface compressive stress after relaxation}) / (\text{surface compressive stress before relaxation})\} \times 100 \, (\%)$$

The surface compressive stress after relaxation (unit: MPa) and stress residual ratio (%) are shown in Table 5.

[Table 5]

Table 5

| Example No. | | Ex. 5 | Ex. 6 | Ex. 10 | Ex. 11 | Ex. 12 | Ex. 21 | Ex. 22 | Ex. 24 | Ex. 26 |
|---|---|---|---|---|---|---|---|---|---|---|
| Photoelastic constant [nm/cm/MPa] | | 41.40 | *40.60* | *36.50* | *35.40* | 34.35 | 34.90 | 32.48 | 31.78 | 31.29 |
| Experiment 2 | Sample thickness [mm] | 4 | 4 | 4 | 4 | 4 | 4 | 4 | 4 | 4 |
| | Physical strengthening condition | 730°C | 730°C | 730°C | 730°C | 770°C | 730°C | 770 | 825 | 825 |
| | Stress: initial [MPa] | 22.5 | 22.7 | 25.0 | 29.6 | 27.9 | 24.8 | 15.0 | 29.0 | 17.8 |
| | Stress: after heating at 400°C for 21 hours [MPa] | 18.6 | 18.2 | 23.0 | 27.5 | 23.7 | 13.7 | 13.0 | 26.3 | 17.5 |
| | Stress: after heating at 400°C for 150 hours [MPa] | 14.1 | 13.6 | 19.2 | 23.1 | 17.0 | 8.9 | 10.7 | 23.4 | 15.8 |
| | Stress: after heating at 400°C for 300 hours [MPa] | 13.9 | 13.2 | 18.6 | 22.7 | 15.4 | 8.7 | N.D. | 22.6 | 15.0 |
| | Residual ratio: after heating at 400°C for 21 hours [%] | 82.5 | 80.2 | 92.0 | 92.9 | 84.9 | 55.3 | 86.7 | 90.7 | 98.3 |
| | Residual ratio: after heating at 400°C for 150 hours [%] | 62.7 | 60.1 | 76.9 | 78.2 | 60.9 | 35.7 | 71.3 | 80.7 | 88.8 |
| | Residual ratio: after heating at 400°C for 300 hours [%] | 61.5 | 58.2 | 74.5 | 76.7 | 55.2 | 35.0 | N.D. | 77.9 | 84.3 |

The strengthened glass of Example 21 that did not satisfy the requirements defined in the present invention was that the stress residual ratio when heat treated at 400°C for 12 hours or longer was low. On the other hand, the strengthened glasses of Examples 5 to 6, 10 to 12, 22, 24 and 26 that satisfied the requirements defined in the present invention were that the stress residual ratio when heat treated at 400°C for 12 hours or longer was high, in other words, the surface compressive stress was difficult to be decreased even though exposed to high temperature for a long period of time.

<Experiment 3>

(Surface compressive stress)

Surface compressive stress (generated stress) of each glass of Examples 12, 22 to 24 and 26 manufactured so as to have a thickness of 4 mm was measured as follows.
A disk having the entire mirror surface was prepared from a glass before forming a compressive stress layer. Using the disk prepared, a photoelastic constant was obtained by a disk compression method. Flat plate-shaped or disk-shaped sample was hung on a jig prepared by SUS bar using a platinum wire, and maintained at 825°C for 10 minutes. After heating, the glass was taken out together with the jig and the glass was rapidly cooled by blowing compressed air to the glass in the atmosphere. The rapidly cooled glass thus prepared was cut, the cut surface was optically polished and retardation was measured by a birefringence measuring device. The retardation value measured was divided by the photoelastic constant and the glass thickness to obtain the generated stress (surface compressive stress), and this was defined as "surface compressive stress before relaxation".
The photoelastic constant (unit: nm/cm/MPa) of the glass, heat treatment temperature (unit: °C), retardation before relaxation (unit: nm) and surface compressive stress before relaxation (unit: MPa) are shown in Table 6.

(Stress residual ratio)

Stress residual ratio of the glass obtained when heat-treated at 600°C for 21 hours or 150 hours was measured as follows.
The glass (strengthened glass) having a compressive stress layer in the surface thereof obtained above was subjected to a heat treatment under the condition of 600°C and a predetermined time (21 hours or 150 hours) and then taken out in the atmosphere. Retardation of the glass after the heat treatment (hereinafter referred to as "retardation after relaxation") was measured by a birefringence measuring device. The measured value of the retardation after relaxation was divided by the photoelastic constant and the glass thickness to obtain surface compressive stress after the heat treatment, and the surface compressive stress obtained was defined as "surface compressive stress after relaxation".
The stress residual ratio was calculated based on the following formula.

$$\text{Stress residual ratio} = \{(\text{surface compressive stress after relaxation}) / (\text{surface compressive stress before relaxation})\} \times 100\ (\%)$$

Surface compressive stress after relaxation (unit: MPa) and stress residual ratio (%) are shown in Table 6.

[Table 6]

Table 6

| Example No. | Ex. 12 | Ex. 22 | Ex.23 | Ex. 24 | Ex, 26 |
|---|---|---|---|---|---|
| Photoelastic constant [nm/cm/MPa] | 34.35 | 32.48 | 32.11 | 31.78 | 31.29 |

(continued)

| Example No. | | Ex. 12 | Ex. 22 | Ex.23 | Ex. 24 | Ex, 26 |
|---|---|---|---|---|---|---|
| Experiment 3 | Sample thickness [mm] | 4 | 4 | 4 | 4 | 4 |
| | Physical strengthening temperature | 830°C | 830°C | 825°C | 825°C | 825°C |
| | Stress: initial [MPa] | 61.0 | 39.0 | 33.9 | 28.5 | 21.5 |
| | Stress: after heating at 600°C for 21 hours [MPa] | 0.4 | 1.3 | 2.3 | 3.0 | 2.9 |
| | Stress: after heating at 600°C for 150 hours [MPa] | N.D. | N.D. | 1.0 | 1.0 | 1.0 |
| | Residual ratio: after heating at 600°C for 21 hours [%] | 0.7 | 3.3 | 6.8 | 10.5 | 13.5 |
| | Residual ratio: after heating at 600°C for 150 hours [%] | N.D. | N.D. | 2.9 | 3.5 | 4.7 |

From the above results, it was confirmed that in all of the strengthened glasses of Examples 12 and 22 to 24 and 26, the stress remains 0.7% or more even though maintained at 600°C for 21 hours.

<Experiment 4>

(Surface compressive stress)

Surface compressive stress (generated stress) of each glass of Examples 13, 29 and 30 manufactured so as to have a thickness of 4 mm was measured as follows.

A disk having the entire mirror surface was prepared from a glass before forming a compressive stress layer. Using the disk prepared, a photoelastic constant was obtained by a disk compression method. Flat plate-shaped or disk-shaped sample was maintained in a molten salt containing 99 wt% $KNO_3$ and 1 wt% $NaNO_3$ at 450 to 500°C for 6 hours. After washing with water, the cut surface was optically polished and retardation was measured by a birefringence measuring device. The retardation value measured was divided by the photoelastic constant and the glass thickness to obtain the generated stress (surface compressive stress), and this was defined as "surface compressive stress before relaxation".

The photoelastic constant (unit: nm/cm/MPa) of the glass, heat treatment temperature (unit: °C), retardation before relaxation (unit: nm) and surface compressive stress before relaxation (unit: MPa) are shown in Table 7.

(Stress residual ratio)

Stress residual ratio of the glass obtained when heat-treated at 500°C for 2 hours or 150 hours was measured as follows.

The glass (strengthened glass) having a compressive stress layer in the surface thereof obtained above was subjected to a heat treatment under the condition of 500°C and a predetermined time (2 hours or 150 hours) and then taken out in the atmosphere. Retardation of the glass after the heat treatment (hereinafter referred to as "retardation after relaxation") was measured by a birefringence measuring device. The measured value of the retardation after relaxation was divided by the photoelastic constant and the glass thickness to obtain surface compressive stress after the heat treatment, and this was defined as "surface compressive stress after relaxation".

The stress residual ratio was calculated based on the following formula.

$$\text{Stress residual ratio} = \{(\text{surface compressive stress after relaxation}) / (\text{surface compressive stress before relaxation})\} \times 100\ (\%)$$

Surface compressive stress after relaxation (unit: MPa) and stress residual ratio (%) are shown in Table 7.

[Table 7]

Table 7

| Example No. | | | Ex. 13 | Ex. 29 | Ex. 30 |
|---|---|---|---|---|---|
| Photoelastic constant [nm/cm/MPa] | | | 34.35 | 32.34 | 29.81 |
| Experiment 4 | | Sample thickness [mm] | 4 | 4 | 4 |
| | | Chemical strengthening temperature | 450°C | 500°C | 500°C |
| | | Chemical strengthening time | 6 h | 6 h | 6 h |
| | | $KNO_3$ concentration | 99 wt% | 99 wt% | 99 wt% |
| | | Stress: initial [MPa] | 2 | 9 | 16 |
| | | Stress: after heating at 500°C for 21 hours [MPa] | 2 | 4 | 7 |
| | | Stress: after heating at 500°C for 150 hours [MPa] | 2 | N.D. | N.D. |
| | | Stress: after heating at 500°C for 300 hours [MPa] | N.D. | N.D. | N.D. |
| | | Residual ratio: after heating at 500°C for 21 hours [%] | 100.0 | 44.4 | 43.8 |
| | | Residual ratio: after heating at 500°C for 150 hours [%] | 83.3 | N.D. | N.D. |
| | | Residual ratio: after heating at 500°C for 300 hours [%] | N.D. | N.D. | N.D. |

<Experiment 5>

(Surface compressive stress)

Surface compressive stress (generated stress) of the glass of Example 13 manufactured so as to have a thickness of 4 mm was measured as follows.

A disk having the entire mirror surface was prepared from a glass before forming a compressive stress layer. Using the disk prepared, a photoelastic constant was obtained by a disk compression method. Flat plate-shaped or disk-shaped sample was hung on a jig prepared by SUS bar using a platinum wire, and maintained at 750°C for 10 minutes. After heating, the glass was taken out together with the jig and the glass was rapidly cooled by blowing compressed air to the glass in the atmosphere. The rapidly cooled glass thus prepared was maintained in a molten salt containing 99 wt% $KNO_3$ and 1 wt% $NaNO_3$ at 500°C for 6 hours. After washing with water, the cut surface was optically polished and retardation was measured by a birefringence measuring device. The retardation value measured was divided by the photoelastic constant and the glass thickness to obtain the generated stress (surface compressive stress), and this was defined as "surface compressive stress before relaxation".

The photoelastic constant (unit: nm/cm/MPa) of the glass, heat treatment temperature (unit: °C), retardation before relaxation (unit: nm) and surface compressive stress before relaxation (unit: MPa) are shown in Table 8.

(Stress residual ratio)

Stress residual ratio of the glass obtained when heat-treated at 500°C for 2 hours or 150 hours was measured as follows.

The glass (strengthened glass) having a compressive stress layer in the surface thereof obtained above was subjected to a heat treatment under the condition of 500°C and a predetermined time (2 hours or 150 hours) and then taken out in the atmosphere. Retardation of the glass after the heat treatment (hereinafter referred to as "retardation after relaxation") was measured by a birefringence measuring device. The measured value of the retardation after relaxation was divided by the photoelastic constant and the glass thickness to obtain surface compressive stress after the heat treatment, and the surface compressive stress obtained was defined as "surface compressive stress after relaxation".

The stress residual ratio was calculated based on the following formula.

$$\text{Stress residual ratio} = \{(\text{surface compressive stress after relaxation}) / (\text{surface compressive stress before relaxation})\} \times 100 \ (\%)$$

Surface compressive stress after relaxation (unit: MPa) and stress residual ratio (%) are shown in Table 8.

[Table 8]

Table 8

| Example No. | | Ex. 13 |
|---|---|---|
| Photoelastic constant [nm/cm/MPa] | | 34.35 |
| Experiment 5 | Sample thickness [mm] | 4 |
| | Physical strengthening condition | 750°C |
| | Chemical strengthening temperature | 500°C |
| | Chemical strengthening time | 6 h |
| | $KNO_3$ concentration | 99 wt% |
| | Stress: initial [MPa] | 14 |
| | Stress: after heating at 500°C for 21 hours [MPa] | 13 |
| | Stress: after heating at 500°C for 150 hours [MPa] | 7 |
| | Stress: after heating at 500°C for 300 hours [MPa] | 7 |
| | Residual ratio: after heating at 500°C for 21 hours [%] | 97.1 |
| | Residual ratio: after heating at 500°C for 150 hours [%] | 51.5 |
| | Residual ratio: after heating at 500°C for 300 hours [%] | 51.5 |

(Presence or absence of devitrification at temperature T3>

The presence or absence of devitrification at the temperature T3 was examined in the glasses of Examples 2, 5, 10 to 15, 17, 19 to 20 and 23 to 31. As a result, the devitrification did not occur in all of the glasses.

(Electrical conductivity σ at temperature T3)

Electrical conductivity σ at the temperature T at which a viscosity of the glass is $10^3$ dPa·s of the glasses of Examples 2, 5, 12, 17, 20 to 22, 24, 26, 29 and 30 was measured by a four-terminal method. The measurement results are shown in Table 9 as the value of log σ (ms/m).

[Table 9]

Table 9

| Example No. | Ex. 2 | Ex. 5 | Ex. 12 | Ex. 17 | Ex. 20 | Ex. 21 | Ex. 22 | Ex. 24 | Ex. 26 | Ex. 29 | Ex. 30 |
|---|---|---|---|---|---|---|---|---|---|---|---|
| Electrical conductivity at T3 (ms/m) | 2.2 | 2.2 | 3.4 | 3.4 | 2.4 | 3.4 | 3.2 | 3.0 | 2.9 | 3.6 | 3.4 |

(50% Crack initiation load)

Glasses having a mirror finished surface and a thickness of 1 mm of Examples 5, 12, 17 to 24 and 26 were used, and a rate P of occurrence of cracks when a load of 100 gf was applied to Vickers hardness meter using a pyramidal diamond indenter having a dihedral angle of 110° was measured. Specifically, 10-point Vickers indenter was struck by each load of 50 gf, 100 gf, 200 gf, 300 gf, 500 gf and 1000 gf as the load of Vickers hardness meter in the air atmosphere under the conditions of temperature: 24°C and dew point: from 35 to 45°C, and the number of cracks generated at four corners of the indentation. The number of cracks generated was divided by a possible number 40 of initiation of cracks, and the value obtained was defined as an incidence of cracking P. Furthermore, a load at which the incidence of cracking was 50% was obtained by regression calculation, and the value obtained was defined as 50% crack initiation load.

Furthermore, regarding the glass of Example 12, the 50% incidence of cracking was measured in the same manner in the strengthened glass having been subjected to physical strengthening at a physical strengthening temperature of 750°C.

Those measurement results are shown in Table 10.

[Table 10]

Table 10

| Example No. | Ex. 5 | Ex. 12 | Ex. 17 | Ex. 18 | Ex. 19 | Ex. 20 | Ex. 21 |
|---|---|---|---|---|---|---|---|
| 50% Crack initiation load (gf) | 1000 | 1250 | 1450 | 1400 | 1150 | 550 | 350 |
| After physical strengthening | | 1300 | | | | | |
| Example No. | Ex. 22 | Ex. 23 | Ex. 24 | Ex. 26 | | | |
| 50% Crack initiation load (gf) | 1500 | 600 | 350 | 390 | | | |
| After physical strengthening | | | | | | | |

White reference plate was prepared, and color tones (L1*, a1* and b1*) were evaluated by i7 manufactured by X-right. Next, the glass having a thickness of 4 mm of Example 12 was placed on the white reference plate, and color tones (L2*, a2* and b2*) of the white reference plate were evaluated through the glass. Color tone difference of those was calculated by the following formula.

$$\Delta E = ((L1^* - L2^*)^2 + (a1^* - a2^*)^2 + (b1^* - b2^*)^2)^{1/2}$$

Regarding the glass ceramic (NEOCERAM, manufactured by Nippon Electric Glass Co., Ltd., "Ref" in Table 9), the color tone difference was measured in the same manner as above.

Those results are shown in Table 11.

[Table 11]

Table 11

| | Reference plate | Reference plate + Example 12 | Reference plate + Ref |
|---|---|---|---|
| L* | 95 | 93.38 | 89.30 |
| a* | -0.6 | -0.86 | -0.87 |
| b* | 0 | 0.42 | 9.15 |
| ΔE | | 1.69 | 10.78 |

Although the present invention has been described in detail and by reference to the specific embodiments, it is apparent to one skilled in the art that various modifications or changes can be made without departing the spirit and scope of the present invention. This application is based on Japanese Patent Application No. 2017-111183 filed June 5, 2017 and Japanese Patent Application No. 2018-062142 filed March 28, 2018, the disclosures of which are incorporated herein by reference.

**EP 3 636 605 A1**

**Claims**

1.  A strengthened glass obtained by physically strengthening a glass having an average coefficient of thermal expansion of from $20\times10^{-7}$ to $50\times10^{-7}/°C$ at 50 to 350°C and a glass transition temperature of 560°C or higher.

2.  The strengthened glass according to claim 1,
    wherein the glass comprises, as represented by mole percentage based on oxides,
    $R_2O$: from 0 to 5% (provided that $R_2O$ is at least one of $Li_2O$, $Na_2O$ and $K_2O$),
    RO: from 5 to 15% (provided that RO is at least one of MgO, CaO, SrO and BaO),
    $SiO_2$: from 55 to 80%, and
    $B_2O_3$: from 0 to 25%.

3.  A strengthened glass obtained by physically strengthening a glass comprising, as represented by mole percentage based on oxides,
    $R_2O$: from 0 to 4% (provided that $R_2O$ is at least one of $Li_2O$, $Na_2O$ and $K_2O$), and
    $B_2O_3$: from 5 to 25%.

4.  The strengthened glass according to claim 3,
    wherein the glass further comprises, as represented by mole percentage based on oxides,
    $SiO_2$: from 55 to 80%, and
    RO: from 5 to 15% (provided that RO is at least one of MgO, CaO, SrO and BaO).

5.  The strengthened glass according to claim 3 or 4,
    wherein the glass has an average coefficient of thermal expansion of from $20\times10^{-7}$ to $50\times10^{-7}/°C$ at 50 to 350°C.

6.  The strengthened glass according to claim 3 or 4,
    wherein the glass has a glass transition temperature of 560°C or higher.

7.  The strengthened glass according to any one of claims 1 to 6,
    wherein the glass comprises, as represented by weight percentage based on oxides, from 0.0001 to 0.2% of $Fe_2O_3$.

8.  The strengthened glass according to any one of claims 1 to 7,
    wherein the glass comprises, as represented by weight percentage based on oxides, from 0.0001 to 2.0% of at least one selected from the group consisting of a chloride, $SnO_2$ and $SO_3$.

9.  The strengthened glass according to any one of claims 1 to 8,
    wherein the glass has a devitrification temperature lower than a temperature at which a viscosity of the glass is $10^3$ dPa·s.

10. The strengthened glass according to any one of claims 1 to 9,
    wherein the glass has an electrical conductivity $\sigma$ at a temperature at which a viscosity of the glass is $10^3$ dPa·s of 2.5 ms/m or more as a value of log $\sigma$.

11. The strengthened glass according to any one of claims 1 to 10,
    wherein when a glass having a mirror finished surface and having a thickness of 1 mm is used as the glass and an indentation is formed on the strengthened glass using Vickers indenter, a load of the Vickers indenter at which an incidence of cracking is 50% is 100 gf or more.

12. The strengthened glass according to any one of claims 1 to 11, having a surface compressive stress of from 5 to 200 MPa.

13. The strengthened glass according to any one of claims 1 to 12, having a thickness of 2 mm or more.

14. The strengthened glass according to any one of claims 1 to 13, having a stress residual ratio of 75% or more after treated at 400°C for 12 hours.

15. The strengthened glass according to any one of claims 1 to 14, having a stress residual ratio of 60% or more after treated at 400°C for 21 hours.

16. The strengthened glass according to any one of claims 1 to 15, further comprising an organic printed layer comprising an inorganic filler on one main surface of the strengthened glass.

17. The strengthened glass according to claim 16, wherein color tone difference ΔE in a comparison between the strengthened glass further comprising the organic printed layer containing the inorganic filler and only the organic printed layer containing the inorganic filler is 10 or less.

18. The strengthened glass according to any one of claims 1 to 17, further comprising a ceramic printed layer on at least a part of one main surface of the strengthened glass.

19. A glass having an average coefficient of thermal expansion of from $20\times10^{-7}$ to $50\times10^{-7}$/°C at 50 to 350°C, having a glass transition temperature of 560°C or higher, having a thickness of from 2 to 15 mm, comprising, as represented by mole percentage based on oxides, $SiO_2$: from 65 to 75%, $Al_2O_3$: from 5 to 20%, $B_2O_3$: from 0 to 25%, MgO: from 0.1 to 10%, CaO: from 0.1 to 10%, ZnO: from 0 to 5%, $Li_2O$: from 0.1 to 2.5%, $Na_2O$: from 0 to 1.5% and $ZrO_2$: from 0 to 2.5%, and comprising, as represented by weight percentage based on oxides, $Fe_2O_3$: from 0.0001 to 0.2%.

20. A heating cooker comprising the strengthened glass according to any one of claims 1 to 18 as a top plate.

21. A kitchen counter comprising the heating cooker according to claim 20.

## INTERNATIONAL SEARCH REPORT

International application No.

PCT/JP2018/021069

A.  CLASSIFICATION OF SUBJECT MATTER
Int.Cl. C03B27/012(2006.01)i, C03C3/089(2006.01)i, F24C15/10(2006.01)i,
H05B6/12(2006.01)i

According to International Patent Classification (IPC) or to both national classification and IPC

B.  FIELDS SEARCHED

Minimum documentation searched (classification system followed by classification symbols)
Int.Cl. C03B27/012, C03C3/089, F24C15/10, H05B6/12

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2015/111524 A1 (ASAHI GLASS CO., LTD.) 30 July 2015, paragraphs [0022], [0029], [0030], [0035] (Family: none) | 1, 3, 5, 7-15, 20-21<br>16-18<br>2, 4, 6, 19 |
| X<br>A | JP 7-69669 A (CARL-ZEISS-STIFTUNG) 14 March 1995, paragraphs [0011], [0052]-[0057] & US 5656558 A, column 3, lines 15-45, example 3 & EP 638526 A1 & DE 4325656 A | 1-6, 9-15<br>19 |

☒  Further documents are listed in the continuation of Box C.        ☐  See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 17.07.2018 | 31.07.2018 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2018/021069

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2014-504431 A (EUROKERA S.N.C.) 20 February 2014, paragraphs [0005], [0075], [0079], [0080]<br>& US 2013/0256301 A1, paragraphs [0005], [0081], [0092]-[0100] & WO 2012/080672 A1 & EP 2651838 A1 & FR 2969460 A1 & CN 103402935 A & KR 10-2013-0133210 A | 3, 5, 7, 9-15, 20-21<br>16-18<br>19 |
| Y | JP 2013-531776 A (EUROKERA S.N.C.) 08 August 2013, paragraphs [0001], [0054], [0055]<br>& US 2013/0098903 A1, paragraphs [0001], [0002], [0055], [0056] & WO 2012/001300 A1 & EP 2588426 A1 & FR 2962192 A1 & CN 103003211 A & KR 10-2013-0111978 A | 16-18 |
| A | WO 2016/088778 A1 (ASAHI GLASS CO., LTD.) 09 June 2016<br>& US 2017/0247284 A1 & EP 3228601 A1 & CN 107001115 A | 1-21 |
| A | JP 2002-47030 A (CENTRAL GLASS CO., LTD.) 12 February 2002<br>(Family: none) | 1-21 |
| A | JP 2007-254278 A (SCHOTT AG) 04 October 2007<br>& US 2007/0232476 A1 & EP 1837314 A1 & CN 101269914 A | 1-21 |

Form PCT/ISA/210 (continuation of second sheet) (January 2015)

**EP 3 636 605 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016500642 T
- JP 2017111183 A
- JP 2018062142 A